**Europäisches Patentamt**

**European Patent Office**

**Office européen des brevets**

(11) Veröffentlichungsnummer: **0 248 162**
**B1**

(12) # EUROPÄISCHE PATENTSCHRIFT

(45) Veröffentlichungstag der Patentschrift:
31.01.90

(51) Int. Cl.⁴: **C08J 9/30,** C08J 3/20,
C08L 21/02

(21) Anmeldenummer: **87104567.0**

(22) Anmeldetag: **27.03.87**

(54) Aufschäumbare, gelierbare und in der Hitze vulkanisierbare Masse zur Herstellung von Latexschaum.

(30) Priorität: **17.05.86 DE 3616793**
**11.02.87 DE 3704118**

(43) Veröffentlichungstag der Anmeldung:
**09.12.87 Patentblatt 87/50**

(45) Bekanntmachung des Hinweises auf die Patenterteilung:
**31.01.90 Patentblatt 90/5**

(84) Benannte Vertragsstaaten:
**AT BE CH DE FR GB IT LI NL SE**

(56) Entgegenhaltungen:
**DE-A- 1 470 810**
**FR-A- 2 426 061**
**US-A- 3 551 359**

(73) Patentinhaber: **HÜLS AKTIENGESELLSCHAFT, - RSP Patente / PB 15 - Postfach 13 20, D-4370 Marl 1(DE)**

(72) Erfinder: **Knipp, Herbert, Stockwieser Kamp 20, D-4358 Haltern 5(DE)**
Erfinder: **Schulz, Wolfgang, Bachackerweg 47, D-4370 Marl(DE)**

ACTORUM AG

## Beschreibung

Nach dem Stand der Technik wird Latexschaum in der Weise hergestellt, daß eine wie im Oberbegriff von Patenspruch 1 angegebene Masse mit Luft oder einem anderen Gas aufgeschäumt, mit einem Geliermittel, wie beispielsweise Natriumsilkofluorid ($Na_2SiF_6$), versetzt, geliert und dann in der Hitze vulkanisiert wird. Die Gelierung erfolgt bei Raumtemperatur, im Infrarotfeld oder in der Aufheizphase zur Vulkanisation. Der so hergestellt Latexschaum weist eine zellenartige Struktur auf.

Latexschaum soll ein gutes Eigenschaftsbild aufweisen, das durch die folgende Kombination beschrieben werden kann

a) die Härte, d. h. die Eindrückhärte C (DIN 53 576), soll hinreichend hoch sein;
b) Porenstruktur soll bei hinreichend großer Schichtdicke gleichmäßig fein sein.

Hinzu die Forderung der Zuverlässigkeit, daß nämlich bei der Herstellung des Latexschaumes aus einem Naßschaum keine Verarbeitungsstörungen, d.h. insbesondere keine Gelierstörungen, auftreten dürfen.

Weitere Eigenschaften des Latexschaumes, die wahlweise je nach dem Anwendungsweck angestrebt werden, sind:

c. hohe Elastizität (Flexibilität), d. h. im gewünschten Temperaturbereich soll nach längerem Zusammendrücken der Druckverformungsrest (bleibende Verformung, compression set) möglichst niedrig sein (DIN 53 572);
d) hohe Dämpfung im gewünschten Temperaturbereich; oder
e) ein guter Kompromiß von hinreichend hoher Elastizität und hinreichend hoher Dämpfung im gewünschten Temperaturbereich; dabei soll die Dauerstauchermüdung hinreichend gering sein (Dauerschwingversuch, DIN 53 574).

Die Härte wird im wesentlichen durch das Raumgewicht des Latexschaumes (je geringer der Aufschäumungsgrad und je höher dementsprechend das Raumgewicht, um so höher die Eindrückhärte C) und durch die Wahl der Kautschukkomponente gesteuert. Diese ist entweder eine unverstärkte oder eine verstärkte Kautschukkomponente. In letzterem Fall wird bei vorgegebener Eindrückhärte C ein möglichst geringes Raumgewicht angestrebt und hohe Wirtschaftlichkeit erreicht, wobei eine Verminderung der Elastizität durch die Verstärkung in Kauf genommen wird (DE-PS 1 056 364; DE-OSS 1 470 810 und 3 447 585).

Die beschriebene Eigenschaftskombination (a und b) wird in der Regel bei solchen Anwendungen hinreichend gut verwirklicht, bei denen eine Eindrückhärte C bei 40% Verformung von < 400 N (typisches Raumgewicht 0,1 g/cm³, Leichtschaum) oder bei nur 6% Verformung von ebenfalls < 400 N (typisches Raumgewicht 0,3 g/cm³, Grenzbereich zu den Schwerschäumen) gefordert wird (siehe beispielsweise US-PS 3 551 359).

Sie wird jedoch nicht verwirklicht, wenn Latexschäume mit einer Eindrückhärte C bei 6% Verformung von > 500 N, insbesondere > 1000 N, gefordert werden. Derartige Latexschäume konnten nicht aus Naßschäumen mit unverstärkter oder verstärkter Kautschukkomponente erhalten werden. Bei Raumgewichten von > 0,3 g/cm³ traten in der Regel, insbesondere bei Schichtdicken von > 10 mm, Gelierstörungen auf. Die erhaltenen Latexschäume hatten eine ungleichmäßige Porenstruktur und Oberflächenfehler. Sie waren daher unbrauchbar. Eine geringe Verbesserung der Porenstruktur konnte durch den Zusatz von Kreide als Füllstoff (20 pphr, Vergleichsbeispiel A, Tabelle) erzielt werden. Durch diese Maßnahme verschlechterte sich jedoch die Elastizität.

Die Aufgabe der Erfindung ist es, eine aufschäumbare, gelierbare und in der Hitze vulkanisierbare Masse bereitzustellen, aus welcher ein Latexschaum (Schichtdicke > 10 mm) mit der beschriebenen Eigenschaftskombination (a und b; Eindrückhärte C bei 6% Verformung > 500 N) mit hinreichender Zuverlässigkeit hergestellt werden kann.

Die Aufgabe wurde in überraschender Weise wie in den Patentansprüchen angegeben gelöst.

Die Komponente A ist ein Naturkautschuk-Latex (NR-Latex), ein durch Emulsionspolymerisation (radikalische Polymerisation) in Gegenwart einer üblichen Fettseife und/oder Harzseife als Emulgator erhaltener, synthetischer, hoch ungesättigter, gegebenenfalls agglomerierter Kautschuklatex oder ein Gemisch der genannten Latices, oder ein Gemisch eines oder mehrerer der genannten Latices mit einem üblichen Verstärkerlatex (Latex eines verstärkenden Polymerisates).

Geeignet ist ein agglomerierter Chloropren-Kautschuk-Latex (CR-Latex), ein gegebenenfalls agglomerierter Styrol/Butadien-Kautschuk-Latex (SBR-Latex) oder ein Gemisch der genannten Latices. Agglomerierte Latices sind Latices, die Maßnahmen unterworfen wurden, welche die Agglomeration der Kautschukteilchen bewirken (DE-PSS 1 213 984 und 2 645 082). Der CR-Latex und der SBR-Latex sind nicht carboxyliert. Sie sind durch Emulsionspolymerisation (radikalische Polymerisation) in Gegenwart einer üblichen Fettseife und/oder Harzseife als Emulgator erhalten. Der SBR enthält 15 bis 35, vorzugsweise 20 bis 30 Massen-% Struktureinheiten, welche durch Polymerisation von Styrol erhalten sind.

Ein notwendiger Verfahrensschritt bei der Herstellung der Komponente A ist die Einengung des (agglomerierten) Kautschuklatex oder eines Gemisches desselben und eines Verstärkerlatex (Latex eines verstärkenden Polymerisates) bis zu einem Feststoffgehalt (DIN 53 563) von ≥ 55, vorzugsweise ≥ 60 Massen-%. Die Kautschukkomponente besitzt bei einem Feststoffgehalt von 68 Massen-% in der Regel eine Viskosität von ≥ 2500, vorzugsweise ≥ 2000 mPas, bestimmt im Brookfield-Viskosimeter (Spindel III, 30 Umdrehungen/min, 20°C).

Die Komponente B kann in bekannter Weise erhalten sein, z.B. nach DE-PS 2 822 148. Demgegenüber sind die in der DE-PS 2 654 385 u.a. beschriebenen Füllstoff/Kautschuk-Pulver, welche störende Mengen anionischer (anionaktiver) Emulgatoren aus der Gruppe der Sulfonsäuren oder ihrer Salze enthalten, ungeeignet; gleiches gilt für die in der DE-PS 2 439 237 u.a. beschriebenen Füllstoff/Kautschuk-Pulver, welche störende Mengen kationischer Emulgatoren, anionischer Emulgatoren aus der Gruppe der Sulfonsäuren, der Schwefelsäurehalbester und ihrer Salze oder nichtionischer Emulgatoren enthalten.

Um irgendwelche die Gelierung der aufgeschäumten Masse störende Hilfsstoffe auszuschließen, genügen einfache, orientierende Versuche. Ein hinreichend gutes Gelierverhalten zeigt sich in der hinreichend gleichmäßigen Porenstruktur der erhaltenen Latexschäume.

Der Kautschuk in der Komponente B ist NR oder ein synthetischer, hoch ungesättigter Kautschuk, der durch Emulsationspolymerisation (radikalische Polymerisation) in Gegenwart einer üblichen Fettseife und/oder Harzseife als Emulgator oder durch Lösungspolymerisation erhalten ist, oder ein Gemisch der genannten Kautschuke.

Beispiele für Polydienkautschuke in den beiden Komponenten A und B sind NR, der bei Vorliegen in der Komponente B vorzugsweise nicht abgebaut ist, und die synthetischen Polydienkautschuke, wie beispielsweise CR, Isopren-Kautschuk (IR), Butadien-Kautschuk (BR) und 1,3-Butadien/Isopren-Copolymerisate. Beispiele für die ebenfalls geeigneten Cycloolefin-Ringöffnungspolymerisate sind Polypentenamere (Polypentenylene) und Polyoctenamere (Polyoctenylene).

SBR, Acrylnitril/Butadien-Kautschuke (NBR) und die synthetischen Polydienkautschuke in den Komponenten A und B können in üblicher Weise modifiziert sein, indem die ihnen zugrundeliegenden Makromoleküle Struktureinheiten aufweisen, welche durch Polymerisation von üblicherweise in Betracht kommenden, copolymerisierbaren Comonomeren (Modifizierungskomponenten) erhalten sind. Sie sind vorzugsweise nicht carboxyliert.

Die Kautschuke in der Komponente A können mit den Kautschuken in der Komponente B übereinstimmen oder von diesen verschieden sein.

Die Gummiruße in der Komponente B sind beispielsweise Hochaktivruße (Reifenlaufflächenruße).

Beispiele für in der Kautschuktechnik übliche, feinteilige, anorganische Füllstoffe in der Komponente B sind Kreide, Kaolin, Schiefermehl, Kieselsäure wie aktive (hochdisperse) Kieselsäure, welche vorzugsweise mit einem üblichen Silan-Haftvermittler hydrophobiert ist, und Aluminiumhydroxid. Letzteres ist von Interesse wegen seiner flammhemmenden Wirkung.

Unter Schwefel-Vulkanisationsmitteln werden die bekannten Schwefel-Vulkanisationssysteme verstanden. Ein bevorzugtes Vulkanisationssystem enthält Schwefel in Kombination mit den üblichen Beschleunigern. Die Menge des Vulkanisationsmittels richtet sich nach den übrigen Komponenten der Masse der Erfindung und kann durch einfache, orientierende Versuche ermittelt werden.

Das Vulkanisationsmittel wird in der Regel als feinteilige, wäßrige Dispersion, welche durch Mahlen einer Suspension des Vulkanisationsmittels in Wasser erhalten wird, eingesetzt. Die wäßrige Vulkanisationsmittel-Dispersion wird in der Regel insgesamt der Komponente A oder beiden Komponenten (A und B) zugesetzt.

Man kann auch in der Weise vorgehen, daß man das Vulkanisationsmittel zum Teil der Komponente B als feinteilige Dispersion in einem Weichmacheröl, welche durch Mahlen einer Suspension des Vulkanisationsmittels im Weichmacheröl erhalten ist, und zum Teil der Komponente A oder beiden Komponenten (A und B) als feinteilige, wäßrige Dispersion zusetzt. Dies ist vorteilhaft, wenn dem Vulkanisationsmittel hinreichend Gelegenheit zur Diffusion in der Komponente B gegeben wird, und zwar durch Lagerung der mit Vulkanisationsmittel beaufschlagten Komponente B oder der vulkanisierbaren erfindungsgemäßen Masse (Reifung). Dabei diffundiert das Weichmacheröl in der Komponente B und fördert zugleich die Diffusion des Vulkanisationsmittels. Die Lagerung der vulkanisierbaren Masse ist bevorzugt.

Übliche Zusatzstoffe sind beispielsweise Fettseifen und Harzseifen (diese können in der Kautschukkomponente in einer Menge vorliegen, die für die Weiterverarbeitung der Masse der Erfindung ausreicht), Alterungs- und Lichtschutzmittel, Verdickungsmittel, wie beispielsweise Carboxymethylcellulose, flammhemmende Zusatzstoffe, welche in der Regel Gemische von synergistisch wirkenden Stoffen sind, und in der Kautschuktechnik übliche Füllstoffe, wie beispielsweise Gummiruße wie Hochaktivruße, und feinteilige, anorganische Füllstoffe, wie bei speilsweise Kreide, Kaolin, Schiefermehl, Aluminiumhydroxid und Kieselsäure, wie aktive Kieselsäure. Die anorganischen Füllstoffe können in bekannter Weise hydrophobiert sein. Die aktive Kieselsäure ist vorzugsweise mit einem üblichen Silan-Haftvermittler hydrophobiert.

Die beanspruchte Masse enthält vorzugsweise keine zusätzlichen Füllstoffe außer denen der Komponente B.

Die Komponente B kann verstärkt sein. Die Ummantelung der Pulverteilchen mit einem Verstärker (verstärkenden Polymerisat) ist in der Regel unvorteilhaft (US-PS 4 375 497).

Bei geringem Anteil der Komponente B im Verhältnis zur Komponente A ist es erforderlich, bei der Herstellung der letzteren den gegebenenfalls agglomerierten Kautschuklatex oder das Gemisch desselben und eines Verstärkerlatex einzuengen. Dies geschieht in der Regel in einem solchen Maße, daß die erfindungsgemäße Masse ohne Zugabe von Wasser noch pumpfähig und aufschäumbar ist.

Die Mischung genügt folgender Definition:

Komponente B beträgt 20 bis 300 Massen-%, bezogen auf die trockene Komponente A;
Komponente B enthält 20 bis 100 Massen-% Füllstoff und 0 bis 80 Massen-% Weichmacheröl, jeweils bezogen auf den in B enthaltenen Kautschuk;
die Teilchengröße der Komponente B ist wie folgt charakterisiert:
< 10 Massen-% mit einem Teilchendurchmesser von > 1 bis 2 mm (DIN 66 165); mittlerer Teilchendurchmesser: 50 bis 600 µm (DIN 53 477 in Verbindung mit der DIN 66 145);
die Kautschuke enthalten keine störenden Mengen von die Gelierung der aufgeschäumten Masse störenden Hilfstoffen (kationische Emulgatoren, kationische Polymere, anionische Emulgatoren aus der Gruppe der Sulfonsäuren, der Schefelsäurehalbester und ihrer Salze, nichtionische Emulgatoren).

Bevorzugt ist folgende Mischung:

Die Menge der Komponente B beträgt 30 bis 200 Massen-%, bezogen auf die Komponente A (trocken);
Komponente A ist ein Polydienkautschuk-Latex, ein SBR-Latex, ein NBR-Latex oder ein Gemisch der genannten Latices;
der Kautschuk in der Komponente B ist ein Polydienkautschuk, ein SBR, ein NBR, ein Cycloolefin-Ringöffnungspolymerisat oder ein Gemisch der genannten Kautschuke;
die Komponente B enthält 20 bis 80 Massen-% Füllstoff und 0 bis 50 Massen-% Weichmacheröl, jeweils bezogen auf den in B enthaltenen Kautschuk;
die Teilchengröße der Komponente B ist wie folgt charakterisiert:
< 10 Massen-% mit einem Teilchendurchmesser von > 0,8 bis 1,5 mm;
mittlerer Teilchendurchmesser: 100 bis 500 µm;
der Füllstoff in der Komponente B ist ein Gummiruß, ein in der Kautschuktechnik üblicher, feinteiliger, anorganischer Füllstoff oder ein Gemisch derselben, wobei die anorganischen Füllstoffe in bekannter Weise hydrophiert sein können;
das Weichmacheröl in der Komponente B ist ein aromatischer, aliphatischer oder naphthenischer Kohlenwasserstoff oder ein Gemisch derselben.

Für eine spezielle Ausführungsform gilt:

Die Menge der Komponente B beträgt 30 bis 150 Massen-% bexogen auf die Komponente A (trocken);
die Komponents A ist ein NR-Latex;
die Komponente B enthält 40 bis 80 Massen-% Füllstoff und 0 bis 20 Massen-% Weichmacheröl, jeweils bezogen auf den in B enthaltenen Kautschuk. -

Die Aufschäumung, Gelierung und Vulkanisation erfolgen in üblicher Weise. Die je nach Anwendungszweck der Latexschäume mehr oder weniger stark aufgeschäumten Massen haben in der Regel ein hervorragendes Gelierverhalten. Dies zeigt sich in der gleichmäßig feinen Porenstruktur der erhaltenen Latexschäume. Die Zuverlässigkeit in der Erzielung einer hinreichend gleichmäßigen Porenstruktur bei der Herstellung von Latexschäumen im technischen Maßstab wird dadurch erhöht, daß man sol che Hilfsstoffe in der Kautschukkomponente völlig ausschließt, die potentiell die Gelierung der aufgeschäumten Masse stören, und man ≧ 30 Massen-% der Komponents B, bezogen auf die Komponente A (trocken), einsetzt.

Mit den erfindungsgemäßen Massen können zuverlässig Latexschäume mit einer Schichtdicke von > 10 mm hergestellt werden, welche bei 6 % Verformung eine Eindrückharte C von > 500 N aufweisen. Derartige Latexschäume weisen in der Regel ein Raumgewicht von > 0,3 bis 0,7 g/cm³ auf. Sie können als Schwerschäume bezeichnet werden. Schichtdicken von 50 mm sind realisierbar.

Selbstverständlich können mit den erfindungsgemäßen Massen auch Latexschäume hergestellt werden, welche bei 6 % Verformung eine Eindrückhärte C von ≦ 500 N aufweisen. Derartige Latexschäume haben in der Regel ein Raumgewicht von ≦ 0,3 g/cm³. Die Zuverlässigkeit in der Erzielung einer hinreichend gleichmäßigen Porenstruktur bei der Herstellung von derartigen Latexschäumen im technischen Maßstab (schichtdicke beispielsweise 10 mm) ist sogar dann vergleichsweise hoch, wenn man nur 20 bis < 30 Massen-% der Komponente B, bezogen auf die Komponente A (trocken), einsetzt. In diesen extremen Fällen empfiehlt es sich, solche Hilfsstoffe in der Kautschukkomponente völlig auszuschließen, die potentiell die Gelierung der aufgeschäumten Masse stören.

Zu einer Verwirklichung der oben definierten Eigenschaft c (zusätzlich zu den Eigenschaften a und b) gelangt man beispielsweise, wenn man eine Masse einsetzt, die keine zusätzlichen Füllstoffe enthält und eine wie folgt charakterisierte Komponente A aufweist. Diese enthält kein verstärkendes Polymerisat; die Kautschuke in beiden Komponenten A und B sind amorph und weisen einen niedrigen Gehalt an Struktureinheiten auf, die durch Polymerisation von Styrol und durch 1,2- und 3,4-Polymerisation der Diene erhalten sind. Sie weisen dementsprechend eine niedrige Glasübergangstemperatur (Einfrierbereich, Tg) auf. Vorteilhaft ist die schnelle Diffusion des Vulkanisationsmittels in diesen Kautschuken im Vergleich zu einem Kautschuk mit hohem Tg. Die Komponente B enthält kein Weichmacheröl und weist einen niedrigen Gehalt an Füllstoff mit geringer Aktivität auf. Die Vernetzungsdichte im Vulkanisat (Latexschaum) ist hinreichend hoch.

Die so erhältlichen Latexschäume besitzen bei 25 % Verformung im Temperaturbereich von ca. -30 bis 70 °C einen niedrigen Druckverformungsrest, d. h. sie zeigen wegen der Erhaltung des gummielastischen Zustandes bis ca. -30 °C gute Kälteeigenschaften.

Zu einer Verwirklichung der Eigenschaft d (zusätzlich zu den Eigenschaften a und b) gelangt man beispielsweise, wenn man eine Masse einsetzt, die eine wie folgt charakterisierte Komponente A aufweist: Sie ist verstärkt; die Komponente B enthält Weichmacheröl und besitzt einen hohen Gehalt an Füllstoff. Die Kautschuke in den beiden Komponenten A und B sind nicht amorph, sondern teilkristallin. Der Kautschuk in der Komponente A hat einen hohen Gehalt an Struktureinheiten, die durch Polymerisation von Styrol erhalten sind. Der Kautschuk in der Komponente B ist durch Lösungspolymerisation in Gegenwart eines lithiumorganischen Katalysators erhalten und besitzt einen hohen Gehalt an Struktureinheiten, die durch Polymerisation von Styrol und duch 1,2- und 3,4-Polymerisation der Diene erhalten sind (hoher Tg der Kettensegmente in den Makromolekülen entsprechend einer geringen Beweglichkeit der Kettensegmente; vgl. DE-OS 24 59 357, EP-OSS 95 629 und 173 791). Nachteilig sind die langsame Diffusion des Vulkanisationsmittels in diesem Kautschuk mit hohem Tg im Vergleich zur Diffusion des Vulkanisationsmittels in einem Kautschuk mit niedrigem Tg und die eingeschränkten Kälteeigenschaften der so erhältlichen Latexschäume.

Zu einer Verwirklichung der Eigenschaft e (zusätzlich zu den Eigenschaften a und b) gelangt man beispielsweise, wenn man in den nachfolgend beschriebenen, erfindungsgemäßen Beispielen vorgeht.

Latexschäume mit der Eigenschaftskombination a/b/e eignen sich als Schwingungsdämpfungsmaterial, wobei das Raumgewicht und entsprechend die Härte je nach Anwendungzweck hoch oder niedrig eingestellt sein können.

Mit den Massen gemäß der oben definierten speziellen Ausführungsform können Latexschäume erhalten werden, die die Eigenschaftskombination a/b/e und zusätzlich eine hohe Zugfestigkeit (DIN 53 571) und eine hohe Dehnung beim Bruch (DIN 53 571) aufweisen. Sie eignen sich daher hervorragend als Schwingungsdämpfungsmaterial.

Latexschäume, welche aus Massen erhalten sind, welche einen hohen Anteil der Komponente B mit einem hohen Gehalt eines Gummirußes, beispielsweise eines Hochaktivrußes, insbesondere eines Leitfähigkeitsrußes, enthalten, zeichen sich durch einen niedrigen elektrischen Widerstand aus. -

Die Erfindung wird durch die folgenden Beispiels erläutert. Darin bedeuten Teils (T.) Massenteile und bei Gehaltsangaben Prozent (%) Massenprozent.

Die Vergleichmasse und der Vergleichslatexschaum, welche nicht der Erfindung entsprechen, werden mit V bezeichnet.

Die Viskosität wurde wie in der Beschreibung angegeben bestimmt, falls nicht anders angegeben.

Komponente A1

SBR-Latex , der durch Emulsionspolymerisation in Gegenwart von Kaliumoleat als Emulgator erhalten wurde. Der SBR enthielt 26 % Struktureinheiten, die durch Polymerisation von Styrol erhalten sind. Der Latex wurde agglomerisiert und eingeengt.

Feststoffgehalt: 68 %
Viskosität 1 000 mPa s
pH (DIN 606): 11
Oberflächenspannung (DIN 53 593): mN/m
Mooney-Viskositat des Kautschuke (ML$_{1+4}$ 100 °C, DIN 53 523): ca. 120

Komponente A2

NR-Latex

Feststoffgehalt: 60 %
Viskosität (Spindel I): 2 800 mPa s
pH: 9,5
Oberflächenspannung: 40,5 mN/m

Komponente A3

Der der Komponente A1 zugrundeliegende, agglomerierte SBR-Latex wurde mit einem üblichen Verstärkerlatex gemischt (21 Teile verstärkendes Polymerisat, bezogen auf 100 Teile SBR). Das verstärkende Polymerisat enthielt 95 % Struktureinheiten, die durch Polymerisation von Styrol und 5 % Struktureinheiten, die durch Polymerisation von 1,3-Butadien erhalten sind. Das Gemisch der Latices wurde eingeengt.

Feststoffgehalt: 67 %
Viskosität: 1 600 mPa s
pH: 10,2
Oberflächenspannung: 39 mN/m

Komponente B1

Ruß N-330/SBR-Pulver, welches gemäß DE-PS 28 22 148 erhalten wurde. Der SBR wurde durch Emulsionspolymerisation in Gegenwart von Fettseife/Harzseife als Emulgator erhalten. Er enthielt 23,5 % Struktur-Einheiten, die durch Polymerisation von Styrol erhalten sind.
Mooney-Viskosität des Kautschuks: ca. 100.
Das Pulver wurde verfärbend stabilisiert. Es enthielt 76 Teile Ruß bezogen auf 100 Teile des Kautschuks.
Teilchengröße des Pulvers: < 10 Massen-% mit einem Teilchendurchmesser von > 0,8 bis 1,5 mm; mittlerer Teilchendurchmesser: ca. 200 µm.

Komponente B2

Ruß N-110/SBR-Pulver, welches gemäß DE-PS 28 22 148 erhalten wurde. Der SBR wurde durch Emulsionspolymerisation in Gegenwart von Fettseife/Harzseife als Emulgator erhalten. Er enthielt 23,5 % Struktureinheiten, die durch Polymerisation von Styrol erhalten sind.
Mooney-Viskisität des Kautschuks: ca. 50
Das Pulver wurde verfärbend stabilisiert. Es enthielt 50 Teile Ruß, bezogen auf 100 Teile des Kautschuks.
Teilchengröße des Pulvers: < 10 Massen-% mit einem Teilchendurchmesser von > 0,8 bis 1,5 mm; mittlerer Teilchendurchmesser: ca. 350 µm.

Vulkanisationsmittel-Dispersion

Herstellung durch Mahlen (Kugelmühle, 24 Stunden, Raumtemperatur) des gemäß folgender Rezeptur erhaltenen Gemisches (Teilchendurchmesser, geschätzt aus REM-Aufnahmen bei 2 000facher Vergrößerung: < 10 µm.

| Schwefel | 2,0 Teile |
|---|---|
| Zinkoxid | 3,0 Teile |
| Zinkdiethyldithiocarbamat | 1,0 Teile |
| Zink-2-mercatobenzothiazol | 1,0 Teile |
| Diphenylguanidin | 1,0 Teile |
| 2,2'-Methylen-bis-(4-methyl-6-tert.-butylphenol) | 1,0 Teile |
| Betonit | 0,09 Teile |
| Natriumsalz einer Alkylnaphthalinsulfonsäure | 0,45 Teile |
| Wasser | 8,46 Teile |

Natriumsilikofluorid-Dispersion

Herstellung durch Mahlen (Kugelmühle, 24 Stunden, Raumtemperatur) des gemäß folgender Rezeptur erhaltenen Gemisches (Teilchendurchmesser, geschätzt aus REM-Aufnahmen bei 2 000facher Vergrößerung: < 10 µm).

| Natriumsilikofluorid | 25,0 Teile |
|---|---|
| Bentonit | 2,0 Teile |
| wäßrige Kalilauge (10%ig) | 1,0 Teile |
| Wasser | 72,0 Teile |

Herstellung der aufschäumbaren, gelierbaren und in der Hitze vulkanisierbaren Massen 1 bis 5 und V

Masse 1

(100 Teile A1/100 Teile B1)
Die Masse wurde gemäß folgender Rezeptur hergestellt. Dabei wurden die Komponenten in der angegebenen Reihenfolge zusammengegeben und unter intensivem Rühren gemischt.

```
                                              Teile (trocken)

Komponente A1                               : 100,0

Kaliumoleat                                 :   1,5

Komponente B1 (57 % Kautschuk)              : 100,0

Vulkanisationsmittel-Dispersion             :  14,9 (14,9 = 9,5,
                                                      ───   ───
                                                      157   100 d. h. 9,5 Teile, bezogen auf 100 Teile

                                              Kautschuk)

pyrogene (hochdisperse) Kieselsäure         :   0,01


Feststoffgehalt: 75 %

Viskosität: 1 600 mPa s

pH: 10,3
```

Massen 2 bis 5

Entsprechend wurden folgende weiteren Massen hergestellt. Dabei wurde die Menge der Vulkanisationsmittel-Dispersion jeweils der Gesamtmenge des Kautschuks angepaßt.

| Masse 2 | 100 Teile | A1/50 Teile | B1 |
| Masse 3 | 100 Teile | A1/150 Teile | B1 |
| Masse 4 | 100 Teile | A2/100 Teile | B1 |
| Masse 5 | 100 Teile | A1/100 Teile | B2 |

Masse V

(100 Teile A3)

|  | Teile (trocken) |
| --- | --- |
| Komponente A3 (83% Kautschuk) | 100,0 |
| Kaliumoleat | 1.5 |
| Kreide | 20,0 |
| Vulkanisationsmittel-Dispersion | 9,5 |
| pyrogene Kieselsäure | 0,01 |

Herstellung der Latexschäume 1 bis 4 und V

Die Massen wurden in einer Schaumschlagmaschine durch Einschlagen von Luft in einem solchen Maße aufgeschäumt, daß die erhaltenen Latexschäume die in der folgenden Tabelle angegebenen Raumgewichte aufwiesen. Anschließend wurde eine hinreichende Menge der Natriumsilikofluorid-Dispersion (NSF) hinzugegeben und in einer solchen Weise gerührt, daß eine gute Durchmischung erhalten wurde, aber keine weitere Aufschäumung auftrat (ca. 2 Minuten). Die so erhaltene Masse wurde sofort in eine oben offene Kastenform gegeben (40 cm • 40 cm • 5 cm) und bei Raumtemperatur geliert. Die NSF-Menge war so bemessen, daß Gelierung 5 bis 10 Minuten nach Beginn der NSF-Zugabe beendet war (ca. 3 Teile NSF, trocken/100 Teile Komponente A, trocken).

Im Falle Herstellung des Latexschaumes V wurden nach Aufschäumen 10 Teile einer 2,5 %igen, wäßrigen Carboxymethylcellulose-Lösung hinzugegeben. Die Gelierung in einer oben offenen Kastenform (40 cm • 40 cm • 2,5 cm) erfolgte im Infrarotfeld (10 kW/m²). Die NSF-Menge war so bemessen, daß die Gelierung nach 2 bis 4 Minuten im Infrafotfeld beendet war (ca. 2 Teile NSF, trocken/100 Teile Kautschukkomponente A3, trocken).

Zur Vulkanisation wurde ca. 30 Minuten mit Sattdampf auf 100 °C erhitzt. Die Vulkanisate wurden der Kastenform entnommen, auf ein Drahtgewebe gelegt und im Trockenofen mit Heißluft während 16 Stunden bei 80 °C getrocknet (Nachvulkanisation).

Die erhaltenen Latexschaume sind gemäß der folgenden Tabelle charakterisiert.

Tabelle

Charakterisierung der Latexschäume

| Latex-schaum | Masse | Raumgewicht (g/cm³) | Eindrückhärte C* (N) | Druckverformungsrest (%)** 72 h/23°C | 22 h/70°C | Porenstruktur |
|---|---|---|---|---|---|---|
| 1.1 | 1 (100 T. A1/100 T. B1) | 0,275 | 540 | 2,0 | 2,3 | gleichmäßig, übliche Feinheit |
| 1.2 | 1 | 0,350 | 1130 | 2,4 | 2,6 | gleichmäßig, übliche Feinheit |
| 1.3 | 1 | 0,400 | 2000 | 2,2 | 2,9 | gleichmäßig, übliche Feinheit |
| 1.4 | 1 | 0,470 | 2400 | 2,1 | 3,5 | gleichmäßig, übliche Feinheit |
| 1.5 | 1 | 0,540 | 3450 | 2,4 | 3,7 | gleichmäßig, übliche Feinheit |
| 2.1 | 2 (100 T. A1/50 T. B1) | 0,475 | 1880 | 1,7 | 3,0 | gleichmäßig, übliche Feinheit |
| 2.2 | 1 (100 T. A1/100 T. B1) | 0,530 | 2870 | 1,7 | 3,1 | gleichmäßig, übliche Feinheit |
| 2.3 | 3 (100 T. A1/150 T. B1) | 0,530 | 3960 | 2,6 | 2,9 | gleichmäßig, übliche Feinheit |
| 3 | 4 (100 T. A2/100 T. B1) | 0,400 | 1320 | 3,1 | 2,7 | gleichmäßig, übliche Feinheit |
| 4 | 5 (100 T. A1/100 T. B2) | 0,470 | 2370 | 2,1 | 3,9 | gleichmäßig, übliche Feinheit |
| V | V (100 T. A3) | 0,463 | 3450 | 5,0 | 15,4 | ungleichmäßig, grob |

* bei 6% Verformung

** nach einer Lagerung unter den angegebenen Bedingungen im zusammengedrückten Zustand (25% Verformung)

Mit den Latexschäumen 2.1 bis 2.3 wird die Abhängigkeit der Eindrückhärte C von der Menge der Kautschukkomponente B, bezogen auf die Kautschukkomponente A, demonstriert. Dementsprechend kann bei vorgegebener Eindrückhärte C eine möglichst geringes Raumgewicht angestrebt werden (Wirtschaftlichkeit). Dabei ist darauf zu achten, daß die je nach Anwendungzweck zusätzlich geforderten Eigenschaften, wie Dauerstauchermüdung, Zugfestigkeit (DIN 53 571) und Dehnung beim Bruch (DIN 53 571), noch akzeptable sind. Diese Eigenschaften sind u. a. vom Aufschäumungsgrad und von der Art der Komponente A, d. h. von der Art des Kautschuks und von der Größe der Latexteilchen, abhängig.

## Patentansprüche

1. Aufschäumbare, gelierbare und in der Hitze vulkanisierbare Masse zur Herstellung von Latexschaum durch Aufschäumen, Gelieren und Vulkanisation aus einer wäßrigen Kautschukdispersion, einem Schwefel-Vulkanisationsmittel und üblichen Zusatzstoffen, dadurch gekennzeichnet, daß die Kautschukdispersion ein Gemisch aus einem Naturkautschuklatex und/oder einem synthetischen, hochungesättigten, eine übliche Fettseife und/oder Harzseife enthaltenden Kautschuklatex (A) einerseits und einem Pulver (B) aus Füllstoff und einem Naturkautschuk und/oder einem synthetischen, hochungesättigten Kautschuk andererseits ist und darüberhinaus folgende Merkmale aufweist:
– sie enthält keine störenden Mengen von die Gelierung der augeschäumten Masse störenden Hilfsstoffen;
– der Mengenanteil von B ist 20 bis 300 Massen-%, bezogen auf A, trocken;
– B enthält 20 bis 100 Massen-% Füllstoff, bezogen auf den in B enthaltenen Kautschuk;
– der Füllstoff ist ein Gummiruß und/oder ein in der Kautschuktechnik üblicher, feinteiliger, anorganischer Füllstoff;
– <10 Massen-% des Pulvers B besitzt einen Teilchendurchmesser >1 bis 2 mm bei einem mittleren Teilchendurchmesser von 50 bis 600 µm.

2. Masse nach Patentanspruch 1, dadurch gekennzeichnet, daß der Kautschuklatex A mit einer Polymerisatdispersion verstärkt ist.

3. Masse nach Patentanspruch 1, dadurch gekennzeichnet, daß das Pulver B ein Weichmacheröl enthält.

4. Masse nach einem der Patentansprüche 1 bis 3, dadurch gekennzeichnet, daß der Mengenanteil von B 30 bis 200 Massen-%, bezogen auf A, trocken, ist und der Kautschuklatex A einen Feststoffgehalt von >55 Massen-% aufweist.

## Claims

1. An expandable, gellable and heat-vulcanizable composition for the production of latex foam by foaming, gelling and vulcanizing, composed of an aqueous rubber dispersion, a sulphur vulcanizing agent and conventional additives, characterized in that the rubber dispersion is a mixture of, on the one hand, (A) a natural rubber latex and/or a synthetic, highly unsaturated rubber latex containing a conventional fatty soap and/or resin soap, and, on the other hand, (B) a powder composed of filler and a natural rubber and/or a synthetic, highly unsaturated rubber,
and furthermore has the following features: it does not contain troublesome amounts of auxiliaries which disturb the gellation of the expanded composition;
– the proportion of B is 20 to 300% by mass, relative to A, dry;
– B contains 20 to 100% by mass of filler, relative to the rubber contained in B;
– the filler is a rubber black and/or a fine-particle inorganic filler which is conventional in rubber technology;
– <10% by mass of the powder B has a particle diameter of >1 to 2 mm at an average particle diameter of 50 to 600 µm.

2. A composition according to claim 1, characterized in that the rubber latex A is reinforced with a polymer dispersion.

3. A composition according to claim 1, characterized in that the powder B contains a plasticizer oil.

4. A composition according to any one of claims 1 to 3, characterized in that the proportion of B is 30 to 200% by mass, relative to A, dry, and the rubber latex A has a solids content of >55% by mass.

## Revendications

1. Masse pouvant être expansée, gélifiée et vulcanisée à chaud, pour la préparation de mousse de latex par expansion, gélification et vulcanisation, obtenue à partir d'une dispersion aqueuse de caoutchouc, d'un agent de vulcanisation au soufre et d'additifs usuels, caractérisée par le fait que la dispersion de caoutchouc est un mélange constitué par un latex de caoutchouc (A) qui est un latex de caoutchouc naturel et/ou un latex de caoutchouc synthétique hautement insaturé, renfermant un savon gras usuel et/ou un savon résinique, d'une part, et par une poudre (B) constituée d'une charge et d'un caoutchouc naturel et/ou d'un caoutchouc synthétique hautement insaturé, d'autre part, et qui présente en outre les caractéristiques suivantes:
– elle ne contient pas de quantités gênantes d'adjuvants qui gênent la gélification de la masse expansée;
– la fraction quantitative de (B) représente de 20 à 300% en masses, relativement à (A), sèche;
– (B) renferme de 20 à 100% en masse de charge, relativement au caoutchouc contenu dans (B);
– la charge est un noir de caoutchouc et/ou une charge minérale à fines particules, usuelle dans l'industrie du caoutchouc;
– moins de 10% en masse de la poudre (B) possède un diamètre de particule supérieur à 1–2 mm, pour un diamètre de particule moyen de 50 à 600 µm.

2. Masse selon la revendication 1, caractérisée par le fait que le latex de caoutchouc (A) est renforcé avec une dispersion de produit de polymérisation.

3. Masse selon la revendication 1, caractérisée par le fait que la poudre (B) contient une huile plastifiante.

4. Masse selon l'une des revendications 1 à 3, caractérisée par le fait que la fraction de (B) représente de 30 à 200% en masse, relativement à (A), sèche, et que le latex de caoutchouc (A) présente une teneur en matières solides supérieure à 55% en masse.